# FASCICULE DE BREVET EUROPEEN

(11) **EP 3 394 002 B1**
(45) Date de publication et mention de la délivrance du brevet: **21.08.2019**
(21) Numéro de dépôt: 16826121.2
(22) Date de dépôt: 20.12.2016
(51) Int. Cl.: C04B 35/591, C04B 35/622, C04B 35/628, C04B 35/80, C04B 35/58, C04B 35/56, C04B 35/573, F01D 5/28

(54) **PROCÉDÉ DE FABRICATION D'UNE CÉRAMIQUE À PARTIR D'UNE RÉACTION CHIMIQUE ENTRE UN DICILICIURE ET UNE PHASE GAZEUSE RÉACTIVE**
VERFAHREN ZUR HERSTELLUNG EINER KERAMIK DURCH EINE REAKTION ZWISCHEN EINEM DISILIZID UND EINER REAKTIVEN GASPHASE
MANUFACTURING PROCESS OF A CERAMIC VIA A CHEMICAL REACTION BETWEEN A DISILICIDE AND A REACTIVE GASEOUS PHASE

(30) Priorité: 21.12.2015 FR 1562929
(43) Date de publication de la demande: 31.10.2018
(73) Titulaire: Safran Ceramics, 33185 Le Haillan (FR); Centre National de la Recherche Scientifique, 75016 Paris (FR)
(72) Inventeur: MAILLE, Laurence, 33600 Pessac (FR); ROGER, Jérôme, 33600 Pessac (FR); LE PETITCORPS, Yann, 33850 Leognan (FR); REIGNIER, Bernard, 33370 Pompignac (FR)
(74) Mandataire: Cabinet Beau de Loménie
(86) Numéro de dépôt international: PCT/FR2016/053563
(87) Numéro de publication internationale: WO 2017/109373

(56) Documents cités:
- FR-A1- 2 988 777
- GB-A- 1 028 977
- JP-A- H05 330 921
- J. ROGER ET AL: "Isothermal nitridation kinetics of TiSi2 powders", JOURNAL OF SOLID STATE CHEMISTRY, vol. 212, 1 avril 2014 (2014-04-01), pages 134-140, XP055165522, ISSN: 0022-4596, DOI: 10.1016/j.jssc.2014.01.021
- L. MAILLÉ ET AL: "Manufacturing of ceramic matrix composite using a hybrid process combining TiSi2 active filler infiltration and preceramic impregnation and pyrolysis", JOURNAL OF THE EUROPEAN CERAMIC SOCIETY, vol. 34, no. 2, 1 février 2014 (2014-02-01), pages 189-195, XP055164766, ISSN: 0955-2219, DOI: 10.1016/j.jeurceramsoc.2013.08.031
- ADE M ET AL: "Electroconductive ceramic composites with low-to-zero shrinkage during sintering", JOURNAL OF THE EUROPEAN CERAMIC SOCIETY, ELSEVIER SCIENCE PUBLISHERS, BARKING, ESSEX, GB, vol. 23, no. 11, 1 octobre 2003 (2003-10-01), pages 1979-1986, XP004424295, ISSN: 0955-2219, DOI: 10.1016/S0955-2219(02)00427-2
- DATABASE WPI Week 199440 Thomson Scientific, London, GB; AN 1994-322560 XP002768861, & JP H06 248414 A (PRAXAIR ST TECHNOLOGY INC) 6 septembre 1994 (1994-09-06)

## Description

### Arrière-plan de l'invention

L'invention concerne des procédés de fabrication de matériaux céramiques ainsi que des produits pouvant être obtenus par mise en oeuvre de tels procédés.

On connait des procédés de densification de préformes fibreuses par infiltration chimique en phase vapeur (« CVI » : « Chemical Vapor Infiltration »). Ce type de procédé consiste à infiltrer un mélange gazeux contenant l'ensemble des éléments formant le matériau au sein d'une préforme poreuse en vue de sa densification. Ce type de procédé est par exemple décrit dans la demande FR 2 784 695. L'infiltration chimique en phase vapeur dérive de la technique de dépôt chimique en phase vapeur (« CVD » : « Chemical Vapor Déposition ») et possède une cinétique de dépôt constante au cours du temps. C'est une méthode conférant de bonnes propriétés au matériau. Cependant, pour obtenir une matrice de CMC homogène en évitant le bouchage prématuré de la périphérie de la préforme, il peut être nécessaire de travailler à basse pression et relativement basse température (≤ 1100°C) afin de ralentir les cinétiques de croissance. Ceci peut entraîner une durée de fabrication importante des pièces en CMC et rendre le procédé coûteux. Des usinages peuvent être nécessaires afin de ré-ouvrir la porosité de périphérie et permettre un accès des gaz à coeur. Toutefois, la densification matricielle peut être stoppée lorsque la porosité atteint une valeur proche de 10% à 15% du fait de la présence de macropores.

On connait aussi la voie barbotine ou céramique ou sol-gel qui consiste à imprégner les préformes fibreuses par une barbotine ou un sol (mélange de particules de céramique de dimension sub-micrométrique, d'ajouts de frittage et de solvants liquides) puis à sécher et à fritter l'ensemble à 1600-1800°C sous pression. Un tel procédé est par exemple décrit dans EP 0675091 et dans la publication J. Magnant, L. Maillé, R. Pailler, J-C. Ichard, A. Guette, F. Rebillat, E. Philippe. "Carbon fiber/reaction-bonded carbide matrix for composite materials - Manufacture and characterization", J. Europ. Ceram. Soc. 32 (16) 2012, p. 4497-4505. Cependant, l'élaboration de xérogels de carbone peut mettre en oeuvre des produits classés CMR, ce qui peut rendre difficile la production industrielle.

Les différentes voies connues peuvent soit être utilisées indépendamment, soit combinées entre elles pour former des procédés hybrides. On détaille dans la suite quelques exemples de procédés hybrides.

On connait des procédés hybrides barbotine/CVI combinant la voie barbotine (sans ajouts de frittage) et la voie gazeuse. Après imprégnation de la préforme fibreuse par la barbotine, l'infiltration par CVI classique du composite cru peut ensuite permettre de densifier la matrice. Cependant la grande compacité d'une poudre (sub)micrométrique agglomérée est un frein à sa bonne infiltration. Le coeur du cru se densifie mal en raison de la fermeture prématurée de la porosité en périphérie du cru. Les espèces réactives parviennent difficilement dans les petits pores et leur concentration diminue très rapidement de la périphérie vers le coeur ce qui y ralentit fortement, puis empêche la croissance de la couche de consolidation. Tang et al. (S.F. Tang, J.Y. Deng, S.J. Wang, W.C. Liu, K. Yang "Ablation behaviors of ultra-high temperature ceramic composites" Materials Science and Engineering A 465 (2007) 1-7) ont néanmoins réalisé des composites à partir de compacts crus de poudres micrométriques de ZrB₂, SiC, HfC et TaC consolidées par CVI de pyrocarbone. Dans ce cas, la phase matricielle continue est en pyrocarbone. En remplaçant la CVI classique par la CVI pulsée, il est possible de consolider des poudres micrométriques (4-5 µm) formant un compact cru d'épaisseur millimétrique (N. K Sugiyama and Y Ohsawa "Consolidation of Si3N4 powder-preform by infiltration of BN using the pulse CVI process" Journal of materials science letters 7 (1988) 1221-1224). La purge et le remplissage du compact cru permettent d'abaisser périodiquement le gradient de concentration naturel des espèces gazeuses entre coeur et périphérie. Mais la faisabilité n'a pas été rapportée pour des poudres sub-micrométriques et le procédé semble difficilement industrialisable.

Un procédé hybride barbotine/résine précéramique permet d'élaborer une matrice à partir d'une poudre imprégnée et d'une résine précéramique (Peter Greil, Near Net Shape Manufacturing of Polymer Derived Ceramics, J. Europ. Ceram. Soc. 18 1998 p. 1905-1914). L'augmentation volumique de la poudre permet de compenser en partie le retrait volumique de la résine lors de la pyrolyse.

Des travaux ont été menés récemment (Matrices nanostructurées élaborées par voie liquide : application aux composites à matrice céramique, Thèse 4323 Université Bordeaux 1, 2011 et L. Maillé, M.A. Dourges, S. Le Ber, P. Weisbecker, F. Teyssandier, Y. Le Petitcorps, R. Pailler, "Study of the nitridation process of TiSi2 powder", Applied surface science 260 (2012) 29-31) afin d'élaborer une matrice par expansion volumique en faisant réagir une poudre, imprégnée au sein de la préforme, avec un gaz. Le système étudié jusqu'à présent est la nitruration d'une poudre de TiSi₂ par du diazote à pression normale qui permet un gain volumique parmi les plus important de l'ordre de 60%. Dans ces travaux, l'objectif concernait l'élaboration d'une matrice à bas coût en utilisant des fibres Nicalon® instables au-delà de 1100°C et une température de traitement inférieure ou égale à 1100°C a été mise en oeuvre lors de la nitruration. Ces travaux ont mis en évidence que, dans ces conditions, la nitruration de la poudre est relativement lente et incomplète. Le problème concerne la nitruration du silicium en raison d'une cinétique de conversion lente.

La publication de J. Roger et Al. intitulée "Isothermal nitridation kinetics of TiSi2 powders" (J. Solid State Chem. (212), avril 2014, pp.134-140) décrit la nitruration de poudres de TiSi₂ par chauffage à 1000-1200°C pour une durée allant jusqu'à 50h dans une atmosphère de N₂ et explique que la nitruration de TiSi₂ se fait en deux étapes : d'abord la formation de TiN à la surface des particules, puis la réaction de Si avec N₂ pour former Si₃N₄. La première étape est rapide : la cinétique de la réaction est influencée par la deuxième étape. La solution proposée est une diminution de la taille des particules de la poudre initiale et une augmentation de la température. Cependant même à 1200°C le taux de conversion n'est pas 100% : du Si résiduel est présent.

La publication de L. Maillé et Al. intitulée "Manufacturing of ceramic matrix composite using a hybrid process combining TiSi2 active filler infiltration and preceramic imprégnation and pyrolysis" (J. Europ. Ceram. Soc. 34 (2), février 2014, pp.189-195) décrit la nitruration du TiSi₂ dans une atmosphère de N à de basses températures (T≤1100°C), mais mentionne la présence de Si résiduel. Ce document décrit aussi la préparation de CMC renforcés par des fibres de SiC, en particulier pour l'aéronautique, et mentionne la formation de carbures grâce à une atmosphère réactive.

La publication de Ade et Al. intitulée "Electroconductive ceramic composites with low-to-zero shrinkage during sintering" (J. Europ. Ceram. Soc. 23 (11), octobre 2003, pp.1979-1986) décrit la préparation de composites TiN/Si₃N₄, resp. ZrN/Si₃N₄, par nitruration de TiSi₂, resp. ZrSi₂, dans une atmosphère de N₂ à 700-1500°C.

Il existe donc un besoin pour disposer de nouveaux procédés de fabrication de matériaux céramiques à bas coût, utilisables à l'échelle industrielle et dans lesquels une température de traitement relativement basse peut être mise en oeuvre.

En particulier, il existe un besoin pour disposer de nouveaux procédés de densification de préformes fibreuses, utilisables à l'échelle industrielle et présentant un coût et une température de mise en oeuvre relativement faibles.

Il existe aussi un besoin pour disposer de nouveaux procédés de fabrication de matériaux céramiques à bas coût dans lesquelles la réaction chimique mise en oeuvre est complète.

Il existe aussi un besoin pour disposer de nouveaux procédés de fabrication de matériaux céramiques dans lesquels les matériaux obtenus sont sensiblement dépourvus de silicium libre résiduel.

Il existe encore un besoin pour disposer de nouveaux matériaux céramiques présentant des propriétés mécaniques satisfaisantes ainsi qu'une microstructure homogène.

### Objet et résumé de l'invention

A cet effet, l'invention propose, selon un premier aspect, un procédé de fabrication d'un matériau céramique, le procédé étant défini par la revendication 1.

Un disiliciure métallique selon l'invention est un composé de formule chimique MSi₂ où M désigne un métal de transition. La première poudre peut, par exemple, être une poudre de TiSi₂, une poudre de CrSi₂, une poudre de ZrSi₂ ou une poudre de VSi₂.

Dans l'invention, la deuxième poudre favorise la réaction entre la phase gazeuse réactive et la première poudre. Durant la première réaction chimique, il y a expansion volumique de la première poudre par formation d'une ou plusieurs nouvelles phases (nitrures, oxydes, carbures,...) générant ainsi le matériau céramique. La mise en oeuvre d'une deuxième poudre selon l'invention permettant l'obtention de la phase liquide durant la première réaction chimique va avantageusement permettre d'accélérer la cinétique de la première réaction chimique en favorisant une diffusion plus importante des réactifs et, par conséquent, une croissance cristalline rapide des produits de réaction. L'utilisation d'une telle deuxième poudre constitue une astuce permettant d'accélérer la première réaction chimique malgré la mise en oeuvre d'une température de travail relativement basse. Cela permet avantageusement de disposer d'un procédé de fabrication d'un matériau céramique présentant un coût de mise en oeuvre réduit tout en permettant la réalisation d'une réaction chimique relativement rapide. L'invention peut, en outre, avantageusement permettre de former une ou plusieurs phases thermiquement stables et d'obtenir une réaction chimique complète. Par ailleurs, le matériau céramique formé peut ne pas présenter de renfort particulaire dispersé en son sein.

Dans le cas où la phase liquide est formée par fusion d'un alliage d'aluminium et de silicium, ledit alliage d'aluminium et de silicium est choisi de manière à présenter une température de fusion suffisamment basse pour former une phase liquide à la température de travail. Pour cela, une fois la nature chimique de la première poudre, de la phase gazeuse réactive et la température de travail choisies, il suffit de sélectionner un alliage d'aluminium et de silicium ayant une température de fusion suffisamment basse pour obtenir une phase liquide durant la première réaction chimique. Un tel exemple de réalisation correspond, par exemple, au système ZrSi₂ / alliage AS 13 détaillé plus bas. Dans le cas où la phase liquide est formée par fusion d'un alliage d'aluminium et de silicium, la fusion dudit alliage peut se produire lors du traitement de la première poudre par la phase gazeuse réactive ou lors d'un traitement thermique préliminaire réalisé avant le début de la première réaction chimique.

Lorsque la phase liquide est formée suite à la deuxième réaction chimique, il peut y avoir réaction chimique directement entre la première poudre et la deuxième poudre de nickel. Dans ce cas, un mélange comportant la première poudre et la deuxième poudre de nickel est obtenu avant la première réaction chimique. En variante, la deuxième poudre de nickel est d'abord fondue pour former du nickel fondu puis la première poudre est imprégnée par le nickel fondu de manière à réaliser la deuxième réaction chimique et former la phase liquide.

Lorsque la phase liquide est formée suite à la deuxième réaction chimique, la phase liquide comporte au moins un élément de la première poudre et du nickel. Dans ce cas, la phase liquide peut être obtenue suite à une réaction chimique entre au moins le silicium de la première poudre et le nickel de la deuxième poudre. Auquel cas, la phase liquide peut comporter au moins du nickel et du silicium. La phase liquide peut encore être obtenue suite à une réaction chimique entre le silicium de la première poudre, l'élément métallique M de la première poudre et le nickel de la deuxième poudre. Auquel cas, la phase liquide peut comporter au moins du nickel, l'élément métallique M et du silicium. Par exemple, pour le système correspondant à une première poudre de TiSi₂ et une deuxième poudre de nickel, la phase liquide comporte au moins du silicium, du nickel et du titane.

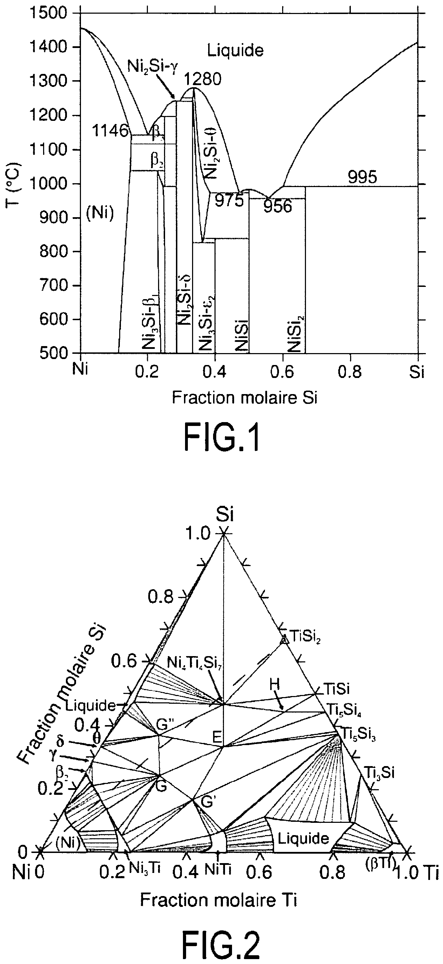

Dans le cas où la phase liquide est formée suite à la deuxième réaction chimique, le nickel constituant la deuxième poudre, lorsque associé à au moins un autre élément de la première poudre, forme un système dont le diagramme de phase montre la formation d'une phase liquide à la température de travail. Par exemple, pour le système correspondant à une première poudre de TiSi₂ et une deuxième poudre de nickel, le diagramme de phase binaire du système Ni-Si montre la formation d'une phase liquide dès 956°C (voir figure 1) et le diagramme de phase ternaire du système Ni-Ti-Si à 1100°C montre aussi la possibilité de former une phase liquide (voir figure 2). Ainsi, par exemple à une température de travail de 1100°C, il sera possible d'utiliser une deuxième poudre de nickel avec une première poudre de TiSi₂ et d'obtenir ainsi la présence de la phase liquide durant la première réaction chimique. Les diagrammes de phases permettent aussi d'identifier pour chaque système d'intérêt les teneurs relatives en constituants nécessaires pour obtenir la phase liquide lorsque celle-ci est formée suite à la deuxième réaction chimique.

Dans le cas où la phase liquide est formée suite à la deuxième réaction chimique, le nickel de la deuxième poudre peut, lorsque associé au silicium, former un système dont le diagramme de phase montre la formation d'une phase liquide à la température de travail.

Dans le cas où la phase liquide est formée suite à la deuxième réaction chimique, le nickel de la deuxième poudre peut, lorsque associé à l'élément métallique de la première poudre, former un système dont le diagramme de phase montre la formation d'une phase liquide à la température de travail.

De préférence, la première poudre peut être une poudre de TiSi₂ et la deuxième poudre peut être une poudre de nickel. Dans ce système, la phase liquide est obtenue suite à la mise en oeuvre de la deuxième réaction chimique.

Un tel système est particulièrement avantageux en raison de l'existence d'un point de fusion bas au sein du système Ni-Si comme expliqué plus haut. Ce système peut, en outre, avantageusement permettre d'obtenir une conversion totale et un matériau céramique présentant des propriétés mécaniques satisfaisantes ainsi qu'une microstructure homogène. En outre, la réaction de la première poudre et de la phase gazeuse réactive est avantageusement facilitée par la mise en oeuvre d'une deuxième poudre de nickel qui permet d'obtenir une phase liquide riche en silicium autour des grains aidant à la diffusion des espèces réactives.

La phase gazeuse réactive employée dans ce système peut, par exemple, comporter l'élément N, par exemple comporter du N₂. On obtient ainsi un matériau comportant essentiellement (i.e. pour plus de 90% en masse) du TiN, du Si₃N₄ et du Ni₄Ti₄Si₇. Le gain en volume suite à la première réaction chimique peut être supérieur ou égal à 40%, par exemple être de 50% environ. Par ailleurs, la formation du composé Ni₄Ti₄Si₇ est avantageuse dans la mesure où ce composé est un composé réfractaire et anti-oxydant.

Dans un exemple de réalisation, la quantité de matière de la première poudre peut, avant le début de la première réaction chimique, être supérieure à la quantité de matière de la deuxième poudre.

Par « quantité de matière », il faut comprendre la quantité de matière mesurée en mole (mol).

Cette dernière caractéristique signifie que, avant le début de la première réaction chimique, la première poudre est mise en oeuvre en une fraction atomique supérieure à la fraction atomique de la deuxième poudre.

On peut avoir avant le début de la première réaction chimique :
- un rapport (quantité de matière de la première poudre)/(quantité de matière de la première poudre + quantité de matière de la deuxième poudre) supérieur à 82,5% et inférieur à 92,5%, et
- un rapport (quantité de matière de la deuxième poudre)/(quantité de matière de la première poudre + quantité de matière de la deuxième poudre) supérieur à 7,5 % et inférieur à 17,5 %.

Le rapport (quantité de matière de la première poudre)/(quantité de matière de la première poudre + quantité de matière de la deuxième poudre) peut, avant le début de la première réaction chimique, être compris entre 85% et 90%.

Le rapport (quantité de matière de la deuxième poudre)/(quantité de matière de la première poudre + quantité de matière de la deuxième poudre) peut, avant le début de la première réaction chimique, être compris entre 10 % et 15 %.

De tels rapports relatifs aux quantités de première et deuxième poudres utilisées peuvent, en particulier, être valables dans le cas où la première poudre est une poudre de TiSi₂ et la deuxième poudre une poudre de nickel.

En variante, la première poudre peut être une poudre de CrSi₂ et la deuxième poudre peut être une poudre de nickel. En variante, la première poudre peut être une poudre de VSi₂ et la deuxième poudre peut être une poudre de nickel. Dans ces deux derniers systèmes, la phase liquide est obtenue suite à la mise en oeuvre de la deuxième réaction chimique.

La phase gazeuse réactive employée dans ces deux derniers systèmes peut, par exemple, comporter l'élément N ou l'élément C, la phase gazeuse pouvant par exemple comporter du N₂ ou du CH₄.

Dans un exemple de réalisation, la deuxième poudre peut être une poudre d'un alliage AlSi13 (alliage d'aluminium et de silicium comprenant sensiblement 13% en masse de silicium).

De préférence, la première poudre peut être une poudre de ZrSi₂ et la deuxième poudre peut être une poudre d'un alliage AS13 (AlSi13).

Ce système peut avantageusement permettre d'obtenir une conversion totale et un matériau céramique présentant des propriétés mécaniques satisfaisantes ainsi qu'une microstructure homogène. En outre, la réaction de la première poudre et de la phase gazeuse réactive est avantageusement facilitée par la mise en oeuvre de la deuxième poudre de l'alliage AS13 qui permet d'obtenir la phase liquide autour des grains aidant à la diffusion des espèces réactives.

Comme mentionné plus haut, dans le cas où la première poudre est une poudre de ZrSi₂ et la deuxième poudre est une poudre de l'alliage AS13, la phase liquide est formée par fusion de l'alliage AS13. L'alliage AS13 présente un point de fusion de 577°C.

La phase gazeuse réactive employée dans ce système peut, par exemple, comporter l'élément N, par exemple du N₂.

En variante, la première poudre peut être une poudre de VSi₂ et la deuxième poudre peut être une poudre de l'alliage AS13. Dans ce dernier cas, la phase liquide est aussi formée par fusion de l'alliage AS13.

La phase gazeuse réactive employée dans ce système peut, par exemple, comporter l'élément N ou l'élément C, la phase gazeuse pouvant par exemple comporter du N₂ ou du CH₄.

Comme évoqué plus haut, la phase gazeuse réactive peut comporter l'élément N ou l'élément C. Lorsque la phase gazeuse comprend l'élément N, la première réaction chimique est une réaction de nitruration. Lorsque la phase gazeuse comprend l'élément C, la première réaction chimique est une réaction de carburation. Dans un exemple de réalisation, la phase gazeuse réactive peut comporter l'un au moins des gaz suivants : NH₃, N₂, un hydrocarbure gazeux, par exemple CH₄, ou le tétraméthylsilane (Si(CH₃)₄). L'hydrocarbure gazeux et le tétraméthylsilane peuvent permettre de réaliser une carburation.

Le matériau céramique formé présente une teneur massique en silicium libre résiduel inférieure ou égale à 1%.

Ce seuil de 1% correspond au seuil en dessous duquel le silicium libre résiduel ne peut être détecté dans le matériau céramique par diffraction aux rayons X (DRX).

Dans un exemple de réalisation, la température de travail peut être inférieure ou égale à 1150°C, voire à 1100°C. La mise en oeuvre de telles valeurs de température peut être avantageuse par exemple lorsque l'on cherche à former une matrice céramique par mise en oeuvre d'un procédé selon l'invention et que le renfort fibreux comporte des fibres SiC-O, comme des fibres Nicalon®, de telles températures évitant la dégradation de ces fibres. Toutefois, l'invention n'est pas limitée à la mise en oeuvre de telles valeurs de température de travail.

Dans un exemple de réalisation, la première réaction chimique peut être effectuée sous une pression comprise entre 3 mbar (millibar) et 10 bars. Cette pression peut par exemple être comprise entre 3 mbar et la pression normale (1,01325 bar) ou en variante être comprise entre la pression normale et 10 bars.

Dans un exemple de réalisation, notamment lorsque l'on cherche à former une matrice céramique par mise en oeuvre du procédé selon l'invention, la taille moyenne des grains de chacune des première et deuxième poudres mises en oeuvre peut être inférieure ou égale à 1 µm.

Sauf mention contraire, par « taille moyenne », on désigne la dimension donnée par la distribution granulométrique statistique à la moitié de la population, dite D50.

La présente invention vise également un procédé de fabrication d'une pièce en matériau composite à matrice céramique, le procédé comportant l'étape suivante :
- formation d'une matrice céramique dans la porosité d'une préforme fibreuse, la matrice céramique étant formée par mise en oeuvre d'un procédé tel que décrit plus haut. La matrice céramique est dans ce cas formée suite à la première réaction chimique.

Dans ce cas, la mise en oeuvre de l'invention est particulièrement avantageuse dans la mesure où elle permet d'élaborer la matrice céramique à une température relativement basse (par exemple inférieure ou égale à 1100°C) et ainsi de disposer d'un procédé n'endommageant pas les fibres du renfort fibreux, ni le revêtement d'interphase éventuellement présent, tout en comblant la porosité dudit renfort fibreux du fait de la réalisation d'une réaction chimique expansive. On peut ainsi avantageusement obtenir un matériau composite à matrice céramique présentant une porosité très faible. En outre, lorsque l'invention est mise en oeuvre pour former une matrice céramique, elle permet avantageusement d'élaborer une matrice dense, homogène, en nitrure ou carbure par mise en oeuvre d'un procédé de coût relativement faible.

Dans un exemple de réalisation, la préforme fibreuse peut comporter une pluralité de fibres céramiques et/ou de fibres de carbone.

Les fibres céramiques peuvent comporter des fibres de type nitrure, des fibres de type carbure, par exemple de carbure de silicium, des fibres de type oxyde et des mélanges de telles fibres. Les fibres de carbure de silicium peuvent par exemple comporter de l'oxygène et être des fibres Si-C-O.

Dans un exemple de réalisation, les fibres de la préforme fibreuse peuvent être revêtues d'un revêtement d'interphase.

Le revêtement d'interphase peut comporter, notamment consister en, du PyC, du BC ou du BN.

L'invention n'est toutefois pas limitée à la formation d'une matrice céramique dans la porosité d'une préforme fibreuse.

En effet, la présente invention vise également un procédé de fabrication d'une pièce revêtue sur sa surface d'un revêtement en matériau céramique comportant une étape de formation dudit revêtement à la surface de la pièce par mise en oeuvre d'un procédé tel que décrit plus haut. Le revêtement est dans ce cas formé suite à la première réaction chimique.

Dans ce cas, la pièce peut être en matériau composite, par exemple en matériau composite à matrice céramique.

Le revêtement ainsi obtenu peut former une barrière environnementale permettant par exemple de protéger la pièce contre l'oxydation. Le revêtement peut encore former une barrière thermique ou un revêtement lissant permettant de lisser la surface de la pièce sous-jacente.

La présente invention vise également un procédé de fabrication d'un bloc d'un matériau céramique comportant une étape de formation dudit bloc par mise en oeuvre d'un procédé tel que décrit plus haut. Le bloc est dans ce cas formé suite à la première réaction chimique. Le bloc ainsi formé peut être de toute forme.

La présente invention vise également un procédé de fabrication d'une turbomachine comportant une étape de fabrication d'un élément de turbomachine au moins par mise en oeuvre d'un procédé tel que décrit plus haut puis une étape d'assemblage dudit élément ainsi fabriqué à un ou plusieurs autres éléments afin d'obtenir la turbomachine.

Une telle turbomachine peut faire partie intégrante d'un moteur aéronautique. L'élément de turbomachine visé plus haut peut, par exemple, constituer un arrière corps de turbomachine, par exemple un arrière-corps de moteur aéronautique.

La présente invention vise également un matériau céramique comportant essentiellement du TiN, du Si₃N₄ et du Ni₄Ti₄Si₇ et présentant une teneur massique en silicium libre résiduel inférieure ou égale à 1%.

Ce matériau peut être obtenu par mise en oeuvre d'un procédé tel que décrit plus haut.

La présente invention vise également une pièce en matériau composite à matrice céramique comportant :
- un renfort fibreux, et
- une matrice présente dans la porosité du renfort fibreux, la matrice comportant un matériau céramique tel que défini plus haut.

La présente invention vise également une turbomachine comportant un tel matériau céramique et/ou une telle pièce en matériau composite à matrice céramique.

La présente invention vise également un moteur aéronautique comportant un tel matériau céramique et/ou une telle pièce en matériau composite à matrice céramique.

### Brève description des dessins

D'autres caractéristiques et avantages de l'invention ressortiront de la description suivante, en référence aux dessins annexés, sur lesquels :
- la figure 1 représente le diagramme de phase binaire du système Ni-Si,
- la figure 2 représente le diagramme de phase ternaire à 1100°C du système Ni-Si-Ti,
- les figures 3A à 3C sont des photographies d'un matériau céramique obtenu après mise en oeuvre d'un procédé selon l'invention,
- la figure 4 est un diagramme DRX d'un matériau céramique obtenu après mise en oeuvre d'un procédé selon l'invention,
- les figures 5A à 5C sont des photographies montrant, après mise en oeuvre d'un procédé selon l'invention pour former une matrice céramique, les fibres d'une préforme fibreuse, l'interphase et la matrice formée,
- les figures 6A et 6B sont des photographies d'un matériau céramique obtenu après mise en oeuvre d'un procédé selon l'invention,
- les figures 7A et 7B sont des photographies d'un matériau céramique obtenu après mise en oeuvre d'un procédé hors invention, et
- la figure 8 montre des mesures d'analyse thermogravimétrique comparant les résultats obtenus entre des procédés selon l'invention et des procédés hors invention.

### Exemples

### Exemple 1 (invention)

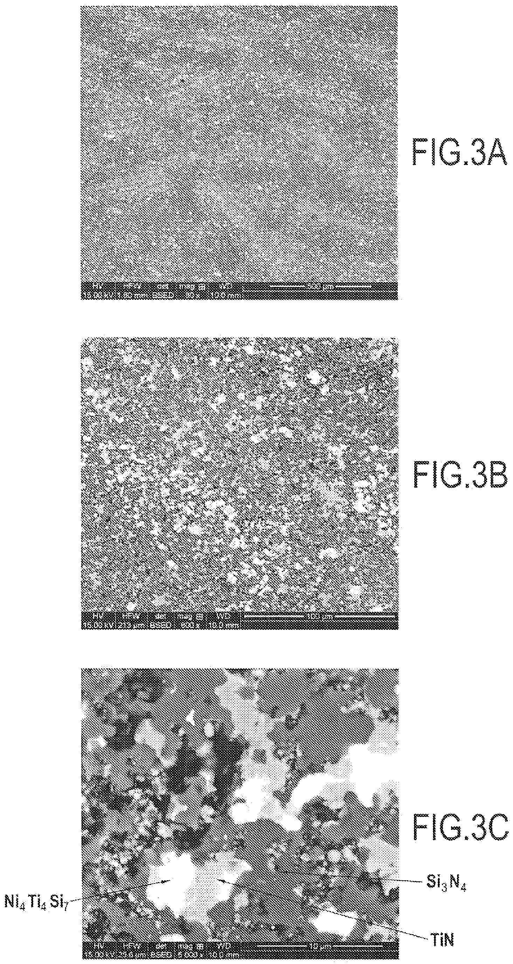

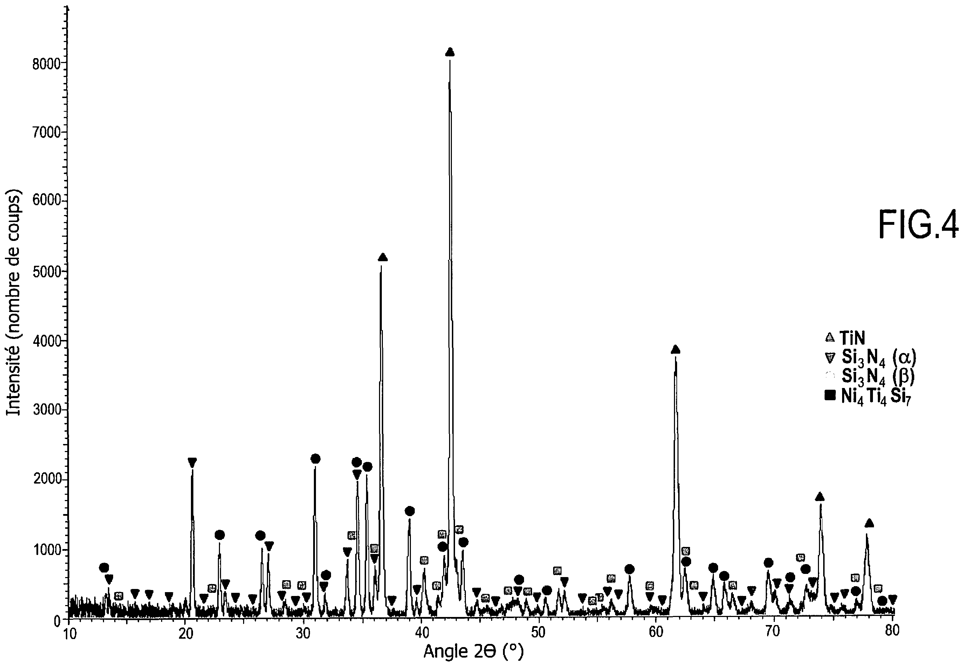

Les figures 3A à 3C sont des photographies montrant le matériau obtenu après conversion d'un échantillon de composition initiale 90% at. TiSi₂ + 10% at. Ni par traitement sous pression normale de N₂ à 1100°C pendant 40 heures. Les phases présentes à l'issue du traitement sont TiN, Si₃N₄ et Ni₄Ti₄Si₇ (voir figure 4). Il est à noter l'absence de TiSi₂ résiduel et de silicium libre à l'issue du traitement. Cette réaction s'accompagne d'un gain volumique de l'ordre de 50%.

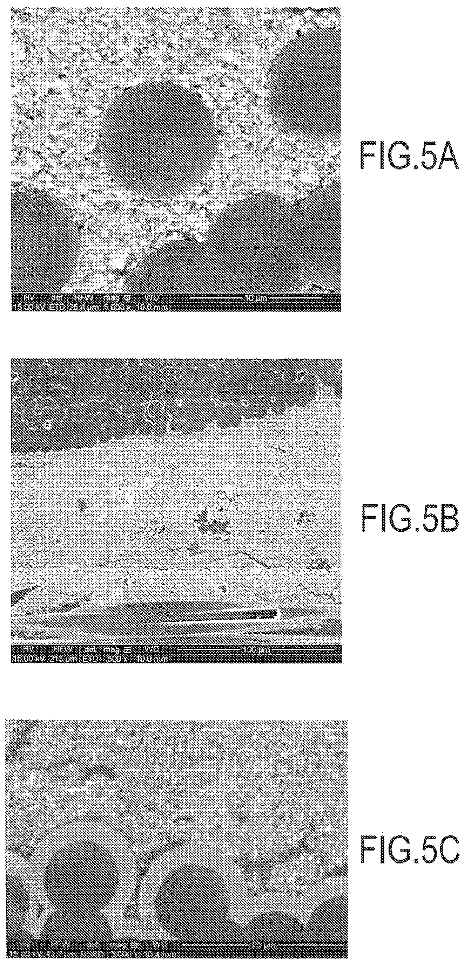

Les figures 5B et 5C sont des photographies montrant notamment une matrice obtenue par conversion d'une poudre infiltrée (d₅₀ = 300nm) de composition initiale 90% at. TiSi₂ + 10% at. Ni traitée sous pression normale de N₂ à 1100°C pendant 40 heures au sein d'une préforme fibreuse. Les phases formées sont identiques à celles présentées ci-dessus (TiN, Si₃N₄ et Ni₄Ti₄Si₇). Aucune réaction n'est observable entre la poudre et les fibres Nicalon® revêtues d'une interphase PyC/SiC.

De même, la figure 5A montre aussi l'absence de réaction entre la poudre et les fibres revêtues d'une interphase lorsqu'une préforme de fibres de carbone revêtues d'une interphase PyC est traitée dans les mêmes conditions opératoires.

L'absence de réactivité, de la phase liquide notamment, est imputable à l'atmosphère d'azote qui tend à privilégier la nitruration. On obtient donc une pièce dans laquelle les fibres ainsi que l'interphase ne sont pas dégradées par la nitruration ainsi qu'une matrice dense et rigide ayant une microstructure homogène. On note aussi une bonne adhésion interphase / matrice.

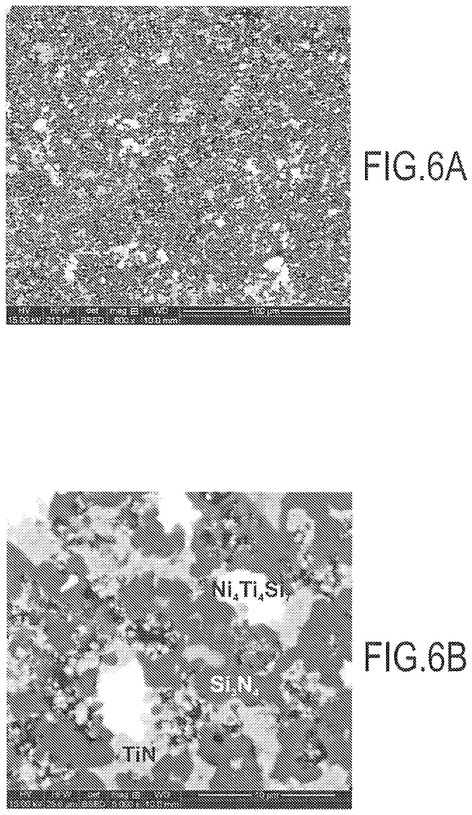

Les figures 6A et 6B montrent des photographies des matrices céramiques obtenues après mise en oeuvre d'un autre exemple de procédé selon l'invention mettant en oeuvre une teneur atomique initiale en nickel dans le mélange de 12,5%. On obtient un matériau dur, dense et homogène ne comportant que du TiN, du Si₃N₄ et du Ni₄Ti₄Si₇. Dans cet exemple, le Ni₄Ti₄Si₇ est présent en une teneur molaire égale à 2%, une teneur massique égale à 14%, et une teneur volumique égale à 10%.

On répertorie dans le tableau 1 ci-dessous les résultats obtenu en utilisant un système TiSi₂+Ni à 1100°C/40h/N₂ à diverses teneurs en nickel.

**Tableau 1**

| **Taux de nickel** | **Gain de volume théorique** | **Prise en masse** | | **Teneur en azote** | | | | | | | |
|---|---|---|---|---|---|---|---|---|---|---|---|
| **(% mol)** | **(%)** | **(%)** | | **(%)** | | **Ni₄Ti₄Si₇** | **TiN** | **Si₃N₄** | **Si libre** | **TiSi₂** | **NiSi/NiSi₂** |
| | | ***Exp. (±2)*** | ***Th.*** | ***Exp. (±5)*** | ***Th.*** | | | | | | |
| **10** | **50,8** | **37,7** | **41,8** | **48** | **51,5** | **X** | **X** | **X** | | | |
| **12,5** | **48,6** | **38,1** | **39,7** | **50** | **50,4** | **X** | **X** | **X** | | | |
| **15** | **46,4** | **36,3** | **37,7** | **50** | **49,2** | **X** | **X** | **X** | | | |

Ces exemples de réalisation conduisent à une réaction complète avec formation de TiN + Si₃N₄ + Ni₄Ti₄Si₇. On note aussi l'absence d'impuretés telles que le silicium libre, TiSi₂ ou NiSi/NiSi₂.

### Exemple 2 (comparatif)

Les résultats obtenus par un procédé selon l'invention ont été comparés avec ceux obtenus par un procédé hors invention dans lequel la deuxième poudre n'est pas utilisée. Le procédé hors invention d'obtention du matériau composite utilisé dans cet exemple comparatif est détaillé ci-dessous :
- imprégnation de la poudre de TiSi₂ au sein d'une préforme fibreuse,
- traitement thermique sous diazote : réaction de nitruration afin de former du TiN et du Si₃N₄.

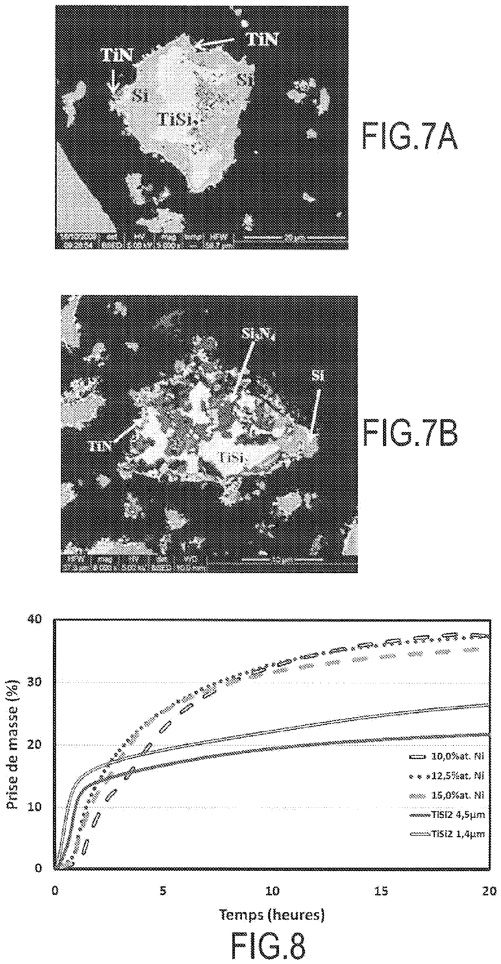

Afin d'éviter la dégradation des fibres SiC (Nicalon®) de la préforme, la température de traitement est limitée à 1100°C. Les résultats obtenus pour l'essai hors invention à une température de réaction de 1100°C sont donnés aux figures 7A et 7B. Les inventeurs ont observé qu'à cette température, la réaction de nitruration était lente et incomplète car la formation de Si₃N₄ peut être relativement difficile à des températures inférieures ou égales à 1100°C. On obtient un gain volumique plus faible et l'on note la présence de silicium métallique mécaniquement et chimiquement indésirable.

La figure 8 montre des mesures d'analyse thermogravimétrique (ATG) obtenues après traitement à 1100°C par du N₂ :
- d'un mélange (100-x) TiSi₂ + x% at. Ni avec x= 10; 12,5 et 15% at. de nickel (invention), ou
- de TiSi₂ seul : sans mise en oeuvre d'une deuxième poudre ni formation d'une phase liquide (hors invention).

On voit que les exemples selon l'invention permettent de promouvoir la nitruration du silicium à une température relativement faible de 1100°C. La nitruration du silicium est facilitée par la présence de la deuxième poudre de nickel qui permet d'obtenir une phase liquide riche en silicium autour des grains. L'ajout de nickel modifie et accroit beaucoup la transformation par rapport aux systèmes sans nickel.

### Exemple 3 (comparatif)

Le procédé hors invention utilisé dans cet exemple comparatif correspond à un procédé de nitruration dans lequel la poudre de nickel utilisable dans le cadre de l'invention est remplacée par une poudre de Ni₃Al. Plus précisément, le présent essai comparatif évalue l'influence d'un ajout de Ni₃Al à raison de 1% en volume comme enseigné dans la publication Zhang et al. (« Influence of 1 vol% Ni3Al addition on sintering and mechanical properties of reaction-bonded Si3N4 », Journal of the European Ceramic Society 15 (1995) 1065-1070) sur la réaction de nitruration du silicium.

Une pastille comprenant un mélange d'une poudre de silicium et de Ni₃Al présent à raison de 1% en volume a été obtenue. Cette pastille présentait un diamètre de 10 mm et une épaisseur de 3 mm. Cette pastille à été traitée par du N₂ en imposant une température de 1100°C comme dans les exemples 1 et 2 ci-dessus. Les résultats suivants ont été obtenus après 30 heures de traitement :
- teneur massique en silicium résiduel : 86,8% environ,
- teneur massique en Si₃N₄α : 11,6%, et
- teneur massique en Si₃N₄β : 1,6%.

Les teneurs massiques ont été déterminées par diffraction aux rayons X.

On constate qu'en mettant en oeuvre du Ni₃Al dans des proportions telles qu'enseignées dans la publication Zhang et *al.* citée plus haut et en imposant une température de travail relativement faible de 1100°C, le degré d'avancement de la réaction de nitruration est significativement plus faible que celui obtenu par ajout d'une poudre de nickel conformément à l'exemple 1 selon l'invention.

### Exemple 4

Des pastilles de ZrSi₂ ont été nitrurées pendant 40 heures sous pression normale de diazote à une température de 1100°C.

Lorsque 10%at. de nickel sont ajoutés au mélange, les phases majoritaires sont, après 40 heures de nitruration, ZrN et Si₃N₄. La présence de ZrSi₂, ZrNi₂Si et NiZr est observée minoritairement. La présence de silicium libre n'a pas été mise en évidence.

Sans ajout de nickel (hors invention), les phases majoritaires sont ZrN et ZrSi₂ après 40 heures de nitruration. Le Si₃N₄ est détecté mais constitue une phase minoritaire. Du silicium libre est également détecté.

L'ajout de nickel facilite donc la nitruration du disiliciure métallique ZrSi₂ même à une température de travail relativement faible de 1100°C.

### Exemple 5

Des pastilles de ZrSi₂ ont été nitrurées pendant 40 heures sous pression normale de diazote à une température de 1100°C.

Lorsqu'une poudre d'un alliage AS13 est ajoutée à raison de 10%at., les phases majoritaires sont, après 40 heures de nitruration, ZrN, Si₃N₄ et ZrSi₂. La présence de silicium libre en quantité minime est observée.

Sans ajout de cette poudre de AS13, les phases majoritaires sont, après 40 heures de nitruration, ZrN et ZrSi₂, du Si₃N₄ est observé minoritairement. Du silicium libre est également détecté.

L'ajout d'un alliage d'aluminium et de silicium facilite donc la nitruration du disiliciure métallique ZrSi₂ même à une température de travail relativement faible de 1100°C.

### Exemple 6

Des pastilles de VSi₂ ont été nitrurées pendant 40 heures sous pression normale de diazote à une température de 1100°C.

Lorsqu'une poudre d'un alliage AS13 est ajoutée à raison de 10%at., les phases majoritaires sont, après 40 heures de nitruration, VSi₂, VN et Si₃N₄. La présence de V_{4,75}Si₃N_{0,58} est également observée en quantité minime.

Sans ajout de cette poudre de AS13, la phase majoritaire est, après 40 heures de nitruration, VSi₂. VN, Si₃N₄ et V_{4,75}Si₃N_{0,58} sont minoritaires.

L'ajout d'un alliage d'aluminium et de silicium facilite donc la nitruration du disiliciure métallique VSi₂ même à une température de travail relativement faible de 1100°C.

### Exemple 7

La possibilité de réaliser la carburation d'un mélange TiSi₂ + 10%at. Ni à 1100°C sous pression normale de méthane a été évaluée par simulation par le logiciel ThermoCalc. Les résultats de simulation ont montrés la formation de SiC, Ti₃SiC₂ et Ni₄Ti₄Si₇ et l'absence de silicium résiduel ou de TiSi₂.

L'expression « compris(e) entre ... et ... » doit se comprendre comme incluant les bornes.

## Revendications

1. Procédé de fabrication d'un matériau céramique, le procédé comportant l'étape suivante :
- formation d'un matériau céramique par mise en oeuvre d'une première réaction chimique au moins entre une première poudre d'un disiliciure métallique MSi₂ où M est un métal de transition et une phase gazeuse réactive, la première réaction chimique étant une réaction de nitruration et la phase gazeuse réactive comprenant l'élément N ou la première réaction chimique étant une réaction de carburation et la phase gazeuse réactive comprenant l'élément C, une phase liquide obtenue à partir d'une deuxième poudre étant présente autour des grains de la première poudre durant la première réaction chimique, une température de travail suffisamment faible pour éviter la fusion de la première poudre étant imposée durant la formation du matériau céramique, et l'une des deux caractéristiques suivantes étant vérifiée :
▪ la deuxième poudre est une poudre de nickel et la phase liquide est obtenue suite à une deuxième réaction chimique entre au moins un élément de la première poudre et le nickel de la deuxième poudre, ou
▪ la deuxième poudre est une poudre d'un alliage d'aluminium et de silicium AlSi13 comprenant 13% en masse de silicium et la phase liquide est obtenue par fusion dudit alliage d'aluminium et de silicium.

2. Procédé selon la revendication 1, **caractérisé en ce que** la première poudre est une poudre de TiSi₂, une poudre de CrSi₂, une poudre de ZrSi₂ ou une poudre de VSi₂.

3. Procédé selon la revendication 2, **caractérisé en ce que** la première poudre est une poudre de TiSi₂ et la deuxième poudre est une poudre de nickel.

4. Procédé selon la revendication 2, **caractérisé en ce que** la première poudre est une poudre de ZrSi₂ et la deuxième poudre est une poudre de l'alliage d'aluminium et de silicium AlSi13.

5. Procédé selon l'une quelconque des revendications 1 à 4, **caractérisé en ce que**, avant le début de la première réaction chimique, la quantité de matière de la première poudre est supérieure à la quantité de matière de la deuxième poudre.

6. Procédé selon la revendication 5, **caractérisé en ce que**, avant le début de la première réaction chimique, les conditions suivantes sont vérifiées :
- le rapport (quantité de matière de la première poudre)/(quantité de matière de la première poudre + quantité de matière de la deuxième poudre) est supérieur à 82,5% et inférieur à 92,5%, et
- le rapport (quantité de matière de la deuxième poudre)/(quantité de matière de la première poudre + quantité de matière de la deuxième poudre) est supérieur à 7,5 % et inférieur à 17,5 %.

7. Procédé selon l'une quelconque des revendications 1 à 6, **caractérisé en ce que** la phase gazeuse réactive comporte l'un au moins des gaz suivants : NH₃, N₂, un hydrocarbure gazeux ou le tétraméthylsilane.

8. Procédé selon l'une quelconque des revendications 1 à 7, **caractérisé en ce que** la température de travail est inférieure ou égale à 1150°C et/ou **en ce que** la première réaction chimique est effectuée sous une pression comprise entre 3 mbar et 10 bars.

9. Procédé de fabrication d'une pièce en matériau composite à matrice céramique mettant en oeuvre un procédé selon l'une quelconque des revendications 1 à 8 et comportant une étape de formation de la matrice céramique dans la porosité d'une préforme fibreuse par réalisation de la première réaction chimique.

10. Procédé de fabrication d'un bloc d'un matériau céramique mettant en oeuvre un procédé selon l'une quelconque des revendications 1 à 8 et comportant une étape de formation dudit bloc par réalisation de la première réaction chimique.

11. Procédé de fabrication d'une pièce revêtue sur sa surface d'un revêtement en matériau céramique mettant en oeuvre un procédé selon l'une quelconque des revendications 1 à 8 et comportant une étape de formation dudit revêtement à la surface de la pièce par réalisation de la première réaction chimique.

12. Procédé de fabrication d'une turbomachine comportant une étape de fabrication d'un élément de turbomachine au moins par mise en oeuvre d'un procédé selon l'une quelconque des revendications 1 à 8 puis une étape d'assemblage dudit élément ainsi fabriqué à un ou plusieurs autres éléments afin d'obtenir la turbomachine.

13. Matériau céramique obtenu par mise en oeuvre d'un procédé selon l'une quelconque des revendications 1 à 3 et 5 à 8, le matériau comportant essentiellement du TiN, du Si₃N₄ et du Ni₄Ti₄Si₇ et présentant une teneur massique en silicium libre résiduel inférieure ou égale à 1%.

14. Pièce en matériau composite à matrice céramique comportant :
- un renfort fibreux, et
- une matrice présente dans la porosité du renfort fibreux, la matrice comportant un matériau céramique selon la revendication 13.

15. Turbomachine comportant un matériau céramique selon la revendication 13 et/ou une pièce selon la revendication 14.

## Patentansprüche

1. Verfahren zur Herstellung eines Keramikmaterials, wobei das Verfahren den folgenden Schritt umfasst:
- Bildung eines Keramikmaterials durch Umsetzung einer ersten chemischen Reaktion mindestens zwischen einem ersten Disilizid-Metallpulver MSi₂, wobei M ein Übergangsmetall ist, und einer reaktiven Gasphase, wobei die erste chemische Reaktion eine Nitrierungsreaktion ist und die reaktive Gasphase das Element N umfasst oder die erste chemische Reaktion eine Aufkohlungsreaktion ist und die reaktive Gasphase das Element C umfasst, wobei eine Flüssigphase, die aus einem zweiten Pulver erhalten wird, um die Körner des ersten Pulvers während der ersten chemischen Reaktion vorhanden ist, eine Arbeitstemperatur, die ausreichend niedrig ist, um das Schmelzen des ersten Pulvers zu vermeiden, während der Bildung des Keramikmaterials angewandt wird und eine der beiden folgenden Eigenschaften erfüllt ist:
▪ das zweite Pulver ist ein Nickelpulver und die Flüssigphase wird infolge einer zweiten chemischen Reaktion zwischen mindestens einem Element des ersten Pulvers und dem Nickel des zweiten Pulvers erhalten, oder
▪ das zweite Pulver ist ein Pulver einer Legierung aus Aluminium und aus Silizium AlSi13, das 13 Masse-% Silizium umfasst, und die Flüssigphase wird durch Schmelzen der Legierung aus Aluminium und aus Silizium erhalten.

2. Verfahren nach Anspruch 1, **dadurch gekennzeichnet, dass** das erste Pulver ein TiSi₂-Pulver, ein CrSi₂-Pulver, ein ZrSi₂-Pulver oder ein VSi₂-Pulver ist.

3. Verfahren nach Anspruch 2, **dadurch gekennzeichnet, dass** das erste Pulver ein TiSi₂-Pulver ist und das zweite Pulver ein Nickelpulver ist.

4. Verfahren nach Anspruch 2, **dadurch gekennzeichnet, dass** das erste Pulver ein ZrSi₂-Pulver ist und das zweite Pulver ein Pulver der Legierung aus Aluminium und aus Silizium AISi13 ist.

5. Verfahren nach einem der Ansprüche 1 bis 4, **dadurch gekennzeichnet, dass** vor dem Beginn der ersten chemischen Reaktion die Stoffmenge des ersten Pulvers größer als die Stoffmenge des zweiten Pulvers ist.

6. Verfahren nach Anspruch 5, **dadurch gekennzeichnet, dass** vor dem Beginn der ersten chemischen Reaktion die folgenden Bedingungen erfüllt sind:
- das Verhältnis (Stoffmenge des ersten Pulvers) / (Stoffmenge des ersten Pulvers + Stoffmenge des zweiten Pulvers) ist größer als 82,5 % und kleiner als 92,5 %, und
- das Verhältnis (Stoffmenge des zweiten Pulvers) / (Stoffmenge des ersten Pulvers + Stoffmenge des zweiten Pulvers) ist größer als 7,5 % und kleiner als 17,5 %.

7. Verfahren nach einem der Ansprüche 1 bis 6, **dadurch gekennzeichnet, dass** die reaktive Gasphase mindestens eines der folgenden Gase umfasst: NH₃, N₂, ein Kohlenwasserstoffgas oder Tetramethylsilan.

8. Verfahren nach einem der Ansprüche 1 bis 7, **dadurch gekennzeichnet, dass** die Arbeitstemperatur kleiner oder gleich 1150 °C ist, und/oder dadurch, dass die erste chemische Reaktion unter einem Druck durchgeführt wird, der zwischen 3 mbar und 10 bar liegt.

9. Verfahren zur Herstellung eines Verbundwerkstoffteils mit einer Keramikmatrix, das ein Verfahren nach einem der Ansprüche 1 bis 8 umsetzt und einen Schritt zur Bildung der Keramikmatrix in den Poren einer Faservorform durch Durchführung der ersten chemischen Reaktion umfasst.

10. Verfahren zur Herstellung eines Blocks aus einem Keramikmaterial, das ein Verfahren nach einem der Ansprüche 1 bis 8 umsetzt und einen Schritt zur Bildung des Blocks durch Durchführung der ersten chemischen Reaktion umfasst.

11. Verfahren zur Herstellung eines auf seiner Oberfläche mit einer Beschichtung aus Keramikmaterial beschichteten Teils, das ein Verfahren nach einem der Ansprüche 1 bis 8 umsetzt und einen Schritt zur Bildung der Beschichtung auf der Oberfläche des Teils durch Durchführung der ersten chemischen Reaktion umfasst.

12. Verfahren zur Herstellung einer Turbomaschine, das einen Schritt zur Herstellung eines Turbomaschinenelements zumindest durch Umsetzung eines Verfahrens nach einem der Ansprüche 1 bis 8 und dann einen Schritt zum Zusammenbau des derart hergestellten Elements mit einem oder mehreren anderen Elementen, um die Turbomaschine zu erhalten, umfasst.

13. Keramikmaterial, das durch Umsetzung eines Verfahrens nach einem der Ansprüche 1 bis 3 und 5 bis 8 erhalten wird, wobei das Material im Wesentlichen TiN, Si₃N₄ und Ni₄Ti₄Si₇ umfasst und einen Massegehalt an freiem Restsilizium von kleiner oder gleich 1 % aufweist.

14. Verbundwerkstoffteil mit einer Keramikmatrix, umfassend:
- eine verstärkte Faser, und
- eine Matrix, die in den Poren der verstärkten Faser vorhanden ist, wobei die Matrix ein Keramikmaterial nach Anspruch 13 umfasst.

15. Turbomaschine, die ein Keramikmaterial nach Anspruch 13 und/oder ein Teil nach Anspruch 14 umfasst.

## Claims

1. A method of fabricating a ceramic material, the method comprising the following steps:
- forming a ceramic material by performing a first chemical reaction at least between a first powder of a metallic disilicide MSi₂ where M is a transition metal and a reactive gas phase, the first chemical reaction being a nitriding reaction and the reactive gas phase comprising the element N or the first chemical reaction being a carburizing reaction and the reactive gas phase comprising the element C, a liquid phase obtained from a second powder being present around the grains of the first powder during the first chemical reaction, a working temperature being imposed during the formation of the ceramic material, which temperature is low enough to avoid melting the first powder, and one of the two following characteristics being true:
- the second powder is a powder of nickel and the liquid phase is obtained as a result of a second chemical reaction between at least one element of the first powder and the nickel of the second powder; or
- the second powder is a powder of an alloy of aluminum and of silicon AlSi13 comprising 13% by weight silicon and the liquid phase is obtained by melting by said alloy of aluminum and of silicon.

2. A method according to claim 1, **characterized in that** the first powder is a powder of TiSi₂, a powder of CrSi₂, a powder of ZrSi₂, or a powder of VSi₂.

3. A method according to claim 2, **characterized in that** the first powder is a powder of TiSi₂ and the second powder is a powder of nickel.

4. A method according to claim 2, **characterized in that** the first powder is a powder of ZrSi₂ and the second powder is a powder of the alloy of aluminum and of silicon AlSi13.

5. A method according to any one of claims 1 to 4, **characterized in that**, prior to beginning the first chemical reaction, the quantity of material of the first powder is greater than the quantity of material of the second powder.

6. A method according to claim 5, **characterized in that**, prior to starting the first chemical reaction, the following conditions are satisfied:
- the ratio of (the quantity of material of the first powder) divided by (the quantity of material of the first powder plus the quantity of material of the second powder) is greater than 82.5% and less than 92.5%; and
- the ratio of (the quantity of material of the second powder) divided by (the quantity of material of the first powder plus the quantity of material of the second powder) is greater than 7.5% and less than 17.5%.

7. A method according to any one of claims 1 to 6, **characterized in that** the reactive gas phase comprises at least one of the following gases: NH₃, N₂, a gaseous hydrocarbon, or tetramethylsilane.

8. A method according to any one of claims 1 to 7, **characterized in that** the working temperature is less than or equal to 1150°C and/or **in that** the first chemical reaction is performed at a pressure lying in the range 3 mbar to 10 bar.

9. A method of fabricating a ceramic matrix composite material part by performing a method according to any one of claims 1 to 8 and including a step of forming the ceramic matrix in the pores of a fiber preform by performing the first chemical reaction.

10. A method of fabricating a ceramic material block by performing a method according to any one of claims 1 to 8 and including a step of forming said block by performing the first chemical reaction.

11. A method of fabricating a part coated on its surface by a ceramic material coating by performing a method according to any one of claims 1 to 8 and including a step of forming said coating at the surface of the part by performing the first chemical reaction.

12. A method of fabricating a turbomachine including a step of fabricating a turbomachine element at least by performing a method according to any one of claims 1 to 8 followed by a step of assembling the thus fabricated element with one or more other elements in order to obtain the turbomachine.

13. A ceramic material obtained by carrying out a method according to any one of claims 1 to 3 and 5 to 8, the method essentially comprising TiN, Si₃N₄, and Ni₄Ti₄Si₇, and presenting a weight content of residual free silicon less than or equal to 1%.

14. A ceramic matrix composite material part comprising:
- fiber reinforcement; and
- a matrix present in the pores of the fiber reinforcement, the matrix comprising a ceramic material according to claim 13.

15. A turbomachine including a ceramic material according to claim 13 and/or a part according to claim 14.
